(19) **Europäisches Patentamt European Patent Office Office européen des brevets**

(11) **EP 2 874 270 B1**

(12) **EUROPEAN PATENT SPECIFICATION**

(45) Date of publication and mention of the grant of the patent:
**20.03.2019 Bulletin 2019/12**

(51) Int Cl.:
*H02J 7/02* (2016.01)       *B60L 3/00* (2019.01)
*B60L 11/18* (2006.01)       *H02J 7/00* (2006.01)

(21) Application number: **13838177.7**

(22) Date of filing: **27.06.2013**

(86) International application number:
**PCT/JP2013/067704**

(87) International publication number:
**WO 2014/045666 (27.03.2014 Gazette 2014/13)**

(54) **BATTERY PACK AND ELECTRIC VEHICLE**

BATTERIEPACK UND ELEKTRISCHES FAHRZEUG

BLOC-BATTERIE ET VÉHICULE ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.09.2012 JP 2012205014**

(43) Date of publication of application:
**20.05.2015 Bulletin 2015/21**

(73) Proprietor: **Kabushiki Kaisha Toshiba Minato-ku Tokyo 105-8001 (JP)**

(72) Inventors:
• **KUWANO, Yuki Tokyo 105-8001 (JP)**
• **YAMANE, Fumiyuki Tokyo 105-8001 (JP)**
• **AKIBA, Takashi Tokyo 105-8001 (JP)**

(74) Representative: **AWA Sweden AB Junkersgatan 1 582 35 Linköping (SE)**

(56) References cited:
| | |
|---|---|
| JP-A- 2002 272 011 | JP-A- 2004 222 378 |
| JP-A- 2011 072 084 | JP-A- 2011 147 308 |
| JP-A- 2012 147 617 | US-A1- 2003 117 109 |
| US-A1- 2009 039 831 | US-A1- 2010 201 326 |
| US-A1- 2011 076 530 | US-A1- 2012 013 303 |

**EP 2 874 270 B1**

## Description

Technical Field

An embodiment of the present invention relates to a battery pack and an electric vehicle.

Background Art

In recent years, according to a rise of awareness of preventing global warming by reducing $CO_2$ emissions, ele ctric vehicles have been actively put onto the market, and it has been considered to provide electric vehicles for lar ge vehicles such as buses and trucks in addition to the con ventional passenger cars and motorcycles.

It has been required that a battery pack mounted on the electric vehicle is fully charged within a short tim e. A quick charger satisfying such requirements has been p roposed. By using a quick charger, chargeable with 50 kW a t maximum, it takes about 30 minutes to fully charge an on-vehicle battery pack of about 24 kWh.

An example of prior art is disclosed in US2012/01 3303 A1.

Citation List

Patent Literature

Patent Literature 1: JP 2008-278635 A

Summary of Invention

Technical Problem

However, large vehicles require larger energies for running compared with the passenger cars, and therefore must be equipped with battery packs of larger capacities. When a conventional quick charger is used for charging an on-vehicle battery pack of such a large capacity, charging cannot be completed within a short time due to restrictions on the maximum output power and current. For example, when a battery pack of 50 kWh is employed, the conventional quick charger requires about one hour for charging.

The large vehicles such as buses and trucks may be used to run according to predetermined cyclic schedules. When the mounted battery pack requires a long time for charging, it is difficult to sufficiently charge the battery pack within an interval between the running periods according to the conventional cyclic schedules. In this case, more large vehicles must be used for achieving the conventional cyclic schedule, and this lowers the operation efficiency.

An embodiment of the invention has been achieved in view of the above circumstances, and an object of the invention is to provide a battery pack and an electric vehicle that can be charged within a short time.

Solution to Problem

According to an embodiment, a battery pack includes a plurality of battery banks including a plurality of battery cells and connected together in parallel, a battery management system detecting and externally outputting voltages and temperatures of the plurality of battery cells and a current flowing through each of the battery banks, a first charge/discharge terminal connected in series to each of positive terminals of the plurality of battery banks, a second charge/discharge terminal connected in series to each of negative terminals of the plurality of battery banks, a plurality of first charge terminals connected to the positive terminals of the plurality of battery banks, respectively, a second charge terminal connected to the negative terminal of each of the plurality of battery banks, respectively, a first main contactor switching connection/disconnection between the positive terminal of the plurality of battery banks and the first charge/discharge terminal, a second main contactor switching connection/disconnection between the negative terminal of the plurality of battery banks and the second charge/discharge terminal, a sub-contactor switching connection between the positive terminal of each of the battery banks and the first charge/discharge terminal, a first charge sub-contactor switching connection/disconnection between the positive terminal of each of the battery banks and the first charge terminal; and a second charge sub-contactor switching connection between the negative terminal of each of the battery banks and the second charge terminal.

Brief Description of Drawings

FIG. 1 is a block diagram schematically illustrating an example of structures of a battery pack and an electric vehicle of an embodiment.

FIG. 2 schematically illustrates an example of a connection structure of an interface between the electric vehicle and a charger of the embodiment.

FIG. 3A is a flowchart illustrating, by way of example, a charging method of the battery pack and the electric vehicle.

FIG. 3B is a flowchart illustrating, by way of example, the charging method of the battery pack and the electric vehicle.

FIG. 4A is a flowchart illustrating an example of a subroutine A of the flowchart illustrated in FIG. 2.

FIG. 4B is a flowchart illustrating an example of the subroutine A of the flowchart illustrated in FIG. 2.

FIG. 5 is a flowchart illustrating an example of a subroutine B of the flowchart illustrated in FIGS. 3A and 3B.

FIG. 6 illustrates, by way of example, a time course of voltages of battery banks BT1 to BT3 of which charge currents are adjusted according to internal resistance values.

FIG. 7 schematically illustrates a non-claimed example of structures of the battery pack and the electric vehicle of the second embodiment.

Description of Embodiments

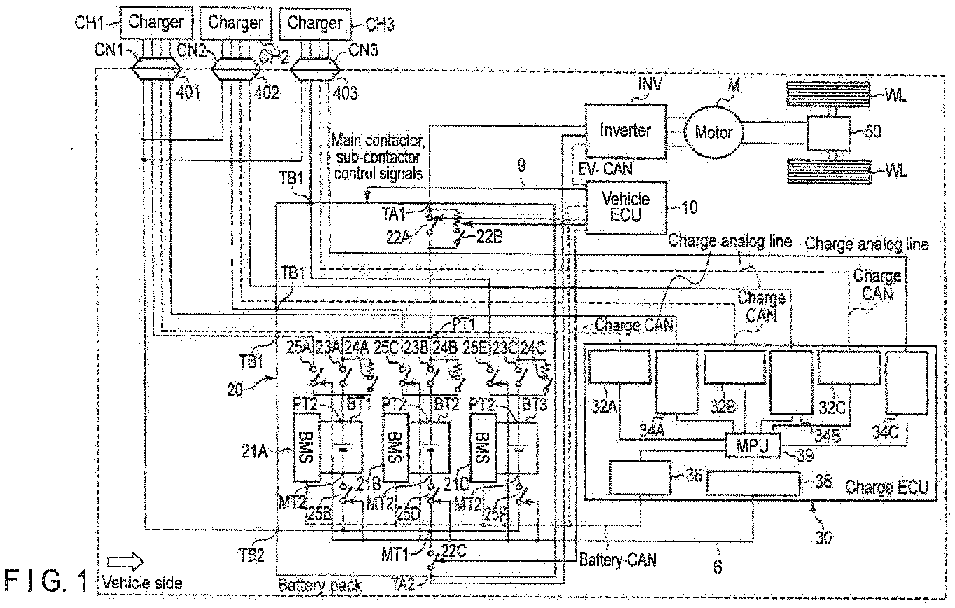

A battery pack and an electric vehicle of an embodiment will be described below with reference to the drawings. FIG. 1 is a block diagram schematically illustrating an example of structures of a battery pack and an electric vehicle of an embodiment.

An electric vehicle of an embodiment includes a motor M, an inverter INV, a vehicle ECU 10, a charge ECU 30, a battery pack 20, a plurality of charge ports 401 to 403, a power transmitting device 50, and drive wheels WL.

The inverter INV converts a DC power of the battery pack 20 into a 3-phase AC power according to a torque instruction received from the vehicle ECU (Electric Control Unit) 10 and supplies the 3-phase AC power to a motor M.

The motor M is, for example, a permanent magnet electric motor, and operates with a 3-phase AC power supplied from the inverter INV.

The power transmitting device 50 is configured to transmit a torque of the motor M to wheel axles and the drive wheels WL, and includes reduction gears, differential gears and the like.

The battery pack 20 is formed of a plurality of battery banks BT1, BT2 and BT3 connected together in parallel, battery management systems (BMSs) 21A, 21B and 21C, a main contactor 22, sub-contactors 23A to 23C, precharge sub-contactors 24A to 24C, charge sub-contactors 25A to 25F, first and second charge/discharge terminals TA1 and TA2, and first and second charge terminals TB1 and TB2. The main contactor 22 is formed of first, second and third main contactors 22A, 22B and 22C.

Each of the battery banks BT1, BT2 and BT3 includes a plurality of battery cells (not illustrated) each having positive terminal PT2 and negative terminal MT2. The plurality of positive terminals PT2 are connected together in parallel, and each are connected in series to a positive terminal PT1. The plurality of negative terminals MT2 are connected together in parallel, and each are connected in series to a negative terminal MT1. In each of the battery banks BT1, BT2 and BT3, the plurality of battery cells are, for example, lithium ion secondary batteries and, for example, hundreds of battery cells are connected in series.

One of the battery management systems 21A, 21B and 21C controls one of the battery banks BT1, BT2 and BT3, respectively. Each of the battery management systems 21A, 21B and 21C receives the voltages of the battery cells, charge/discharge currents, and temperatures near the battery cells from the corresponding one of the battery banks BT1, BT2 and BT3, and calculates SOCs (states of charges), SOHs (states of health) and internal resistance values of the corresponding one of the battery banks BT1, BT2 and BT3. Also, the battery management systems 21A, 21B and 21C monitor the voltages, temperatures and others, and protect the battery cells.

The battery management systems 21A, 21B and 21C notify the vehicle ECU 10 and the charge ECU 30 of the states such as the SOCs, the SOHs, the voltages of the battery cells, the temperatures near the battery cells, the charge/discharge currents, and the internal resistance values of the battery cells of the battery banks BT1, BT2 and BT3. In this embodiment, the battery management systems 21A, 21B and 21C perform the communications with the vehicle ECU 10 and the charge ECU 30 through a communication line based on the CAN (Control Area Network) communication standard.

The first charge/discharge terminal TA1 is connected through the positive terminal PT1 to the positive terminals PT2 of the battery banks BT1 to BT3. The second charge/discharge terminal TA2 is connected through the negative terminal MT1 to the negative terminals MT2 of the battery banks BT1 to BT3. The first charge/discharge terminal TA1 and the second charge/discharge terminal TA2 supply the discharge currents from the plurality of battery banks BT1 to BT3 to the inverter INV, and supply the charge current (regeneration current) from the inverter INV to the battery banks BT1 to BT3.

The first charge terminal TB1 is connected to the positive terminal PT2 of each of the battery banks BT1 to BT3. In this embodiment, the battery pack 20 has the three first charge terminals TB1 corresponding to the three battery banks BT1 to BT3, respectively. The second charge terminal TB2 is connected to the negative terminal MT2 of each of the battery banks BT1 to BT3. In this embodiment, the battery pack 20 has the single second charge terminal TB2 connected to the negative terminals of all the three battery banks BT1 to BT3. The first charge terminal TB1 and second charge terminal TB2 are provided for supplying the charge currents provided from chargers CH1 to CH3 connected to the charge ports 401 to 403 to the battery banks BT1 to BT3, respectively.

The first main contactor 22A selectively connects and disconnects the positive input terminal of the inverter INV to/from the battery pack 20. In other words, the first main contactor 22A selectively connects and disconnects the first charge/discharge terminal TA1 to/from the positive terminal PT1 of the battery banks BT1 to BT3. The second main contactor 22B is a precharge connector which is connected in series to a resistor connected in parallel to the first main contactor 22A, is operable to connect and disconnect the resistor to/from a main circuit connecting the inverter INV and the battery banks BT1 to BT3, and specifically the circuit connected between the positive terminal PT1 and the inverter INV, and is connected prior to the first main contactor 22A for preventing a rush current to the battery banks BT1, BT2 and BT3. The third main contactor 22C selectively connects and disconnects the negative input terminal of the inverter INV to/from the battery pack 20. In other words, the third main contactor 22C selectively connects and disconnects the second charge/discharge terminal TA2 to/from the negative terminal MT1 of the battery banks BT1 to BT3. The vehicle ECU 10 controls the operations of the main contactor 22.

The sub-contactors 23A to 23C selectively connect and disconnect the positive terminals PT2 of the battery banks BT1 to BT3 to/from the first charge/discharge terminal TA1, respectively. In other words, the sub-contactor 23A selectively connects the positive terminal PT2 of the battery bank BT1 to/from the positive input terminal of the inverter INV. The sub-contactor 23B selectively connects the positive terminal PT2 of the battery bank BT2 to/from the positive input terminal of the inverter INV. The sub-contactor 23C selectively connects the positive terminal PT2 of the battery bank BT3 to/from the positive input terminal of the inverter INV.

The sub-contactors 23A to 23C are connected when an ignition IGN is on, and are disconnected when the ignition IGN is off, and the vehicle ECU 10 controls these operations.

The precharge sub-contactor 24A is connected in series to a resistor, connected in parallel to the sub-contactor 23A, for selective connection/disconnection to/from the main circuit, and is connected prior to the sub-contactor 23A for preventing a rush current to the battery bank BT1 when the battery banks BT1 to BT3 are electrically connected. The precharge sub-contactor 24B is connected in series to a resistor, connected in parallel to the sub-contactor 23B, for selective connection/disconnection to/from the main circuit, and is connected prior to the sub-contactor 23B for preventing a rush current to the battery bank BT2 when the battery banks BT1 to BT3 are electrically connected. The precharge sub-contactor 24C is connected in series to a resistor, connected in parallel to the sub-contactor 23C, for selective connection/disconnection to/from the main circuit, and is connected prior to the sub-contactor 23C for preventing a rush current to the battery bank BT3. The vehicle ECU 10 controls the operations of the precharge sub-contactors 24A to 24C.

The charge sub-contactors 25A to 25F respectively control the connection between the respective positive terminals PT2 of the plurality of battery banks BT1 to BT3 and the first charge terminal TB1, and between the respective negative terminals MT2 of the plurality of battery banks BT1 to BT3 and the second charge terminal TB2.

In other words, the charge sub-contactor 25A selectively connects and disconnects the positive terminal PT2 of the battery bank BT1 to/from the charge port 401. The charge sub-contactor 25B selectively connects and disconnects the negative terminal MT2 of the battery bank BT1 to/from the charge port 401 and the negative input terminal of the inverter INV.

The charge sub-contactor 25C selectively connects and disconnects the positive terminal PT2 of the battery bank BT2 to/from the charge port 402. The charge sub-contactor 25D selectively connects and disconnects the negative terminal MT2 of the battery bank BT2 to/from the charge port 402 and the negative input terminal of the inverter INV.

The charge sub-contactor 25E selectively connects and disconnects the positive terminal PT2 of the battery bank BT3 to/from the charge port 403. The charge sub-contactor 25F selectively connects and disconnects the negative terminal MT2 of the battery bank BT3 to/from the charge port 403 and the negative input terminal of the inverter INV.

The charge ECU 30 controls the operations of the charge sub-contactors 25A to 25F. When the ignition of the electric vehicle is off, the charge sub-contactors 25A to 25F are electrically off.

The charge ECU 30 detects the connections of charge connectors CN1, CN2 and CN3 to the charge ports 401, 402 and 403, respectively, and controls the charge currents to the battery banks BT1 to BT3 according to charge control instructions provided from the vehicle ECU 10.

The charge ECU 30 includes a plurality of CAN interfaces 32A to 32C as well as a plurality of analog interface circuits 34A to 34C (first interface circuits), which are connected to the chargers in a one-to-one relationship, respectively. The charge ECU 30 includes CAN interface circuits 32A, 32B and 32C, the analog interface circuits 34A, 34B and 34C, a CAN interface circuit (second interface circuit) 36, a contactor drive circuit 38, and an MPU (Micro Processing Unit) 39.

The CAN interface circuits 32A, 32B and 32C respectively communicate, via corresponding one of the charge ports 401, 402, and 403, and corresponding one of the charge connectors CN1, CN2, and CN3, the information regarding corresponding one of the chargers CH1, CH2 and CH3 and charge current instructions and others with corresponding one of the charge connectors CN1, CN2 and CN3.

The analog interface circuits 34A, 34B and 34C transmit control instructions for starting or prohibiting the charging and others via the charge ports 401, 402 and 403 and the charge connectors CN1, CN2 and CN3, respectively.

The CAN interface circuit 36 performs communications with each of the battery management systems 21A, 21B and 21C and the vehicle ECU 10. The CAN interface circuit 36 receives from the battery management systems 21A, 21B and 21C information about the voltages, temperatures, charge/discharge currents, SOC and others of the battery cells included in the battery banks BT1, BT2 and BT3, respectively. The CAN interface circuit 36 sends the information about the start and stop of the charging the vehicle ECU 10 to the vehicle ECU 10, and receives therefrom the control signal for prohibiting the charging and other signals.

The contactor drive circuit 38 drives and controls the charge sub-contactor 25 selectively connecting and disconnecting the battery banks BT1, BT2 and BT3 to/from the charge ports 401, 402 and 403, respectively.

The MPU 39 controls the operation of the contactor drive circuit 38 based on the information received from each interface circuit, and provides control signals relating to start and stop of the charging, the instruction values of the charge current, and others.

The vehicle ECU 10 includes a main CPU (Central Processing Unit) as an arithmetic unit, a memory, a digital interface (not illustrated), and an analog interface (not illustrated). The vehicle ECU 10 operates various devices on the electric vehicle to cooperate together, and thereby controls the whole electric vehicle. When a user activates the electric vehicle for starting, the vehicle ECU 10 obtains the information about the battery banks BT1, BT2 and BT3 of the battery pack 20 through the battery management systems 21A, 21B and 21C, and controls the connection and disconnection of the main contactor 22, the sub-contactors 23 and the precharge sub-contactors 24 as will be described later.

The plurality of charge ports 401 to 403 are connected to the chargers CH1 to CH3, respectively. In the embodiment, the chargers CH1 to CH3 are quick chargers operable in the quick charging method, for example, conforming to CHAdeMO (trade mark), and the charge ports 401 to 403 and the charge connectors CN1 to CN3 support the quick charger.

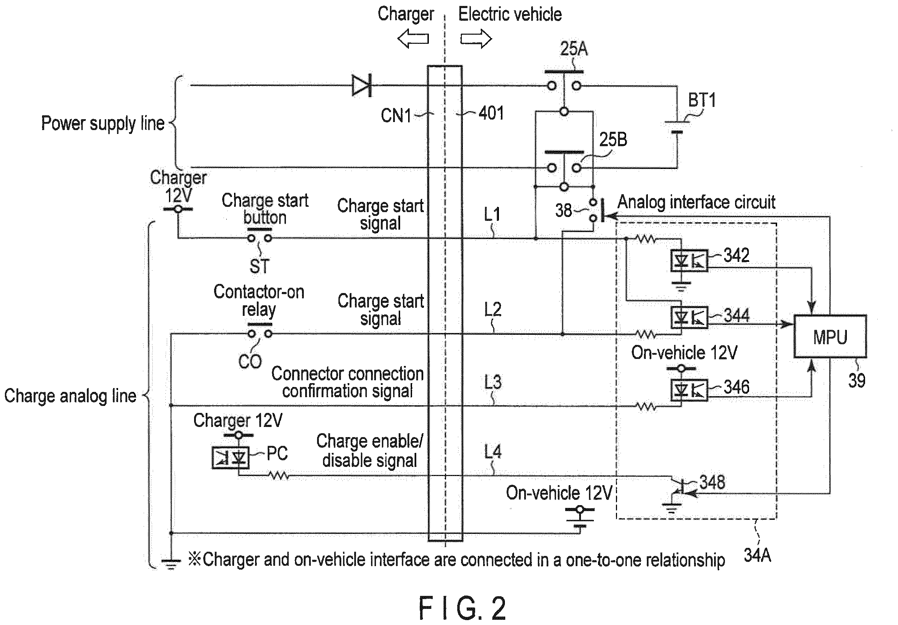

FIG. 2 schematically illustrates an example of a connection condition of the interfaces between the electric vehicle and the chargers of the embodiment. In the embodiment, the chargers CH1 to CH3 are connected to the interfaces of the electric vehicle in the one-to-one relationship. FIG. 2 only illustrates a condition where the charge port 401 is connected to the charge connector CN1, since connection conditions between the charge ports 402 - 403 and the charge connectors CN2 - CN3, which electrically connect the chargers CH2 - CH3 with the analog interface circuits 34B - 34C are the same as the condition between the charge port 401 and the charge connector CN1.

Charge analog lines connected between the charger CH1 and the analog interface circuit 34A have first and second charge start signal lines L1 and L2 as well as a connector connection confirmation signal L3 and a charge enable/disable signal line L4.

The analog interface circuit 34A of the charge ECU 30 includes first, second and third insulation switches 342, 344 and 346 as well as a switch 348.

The first insulation switch 342 is, for example, a photocoupler, has an anode side (collector side) connected through a charge-start button of the charger CH1 and the first charge start line L1 to the power supply (12 V) of the charger CH1, and its cathode side (emitter side) is grounded.

The second insulation switch 344 is, for example, a photocoupler, has an anode side (collector side) connected through the charge-start button of the charger CH1 and the first charge start line L1 to the power supply (12 V) of the charger CH1, and its cathode side (emitter side) is connected to the second charge start line L2. The second charge start line L2 is grounded through a contactor-on relay CO of the charger CH1.

The third insulation switch 346 is, for example, a photocoupler, has an anode side (collector side) connected to an on-vehicle power supply (e.g., lead storage battery of 12 V), and a cathode side (emitter side) is connected to the connector connection confirmation signal line L3. The connector connection confirmation signal line L3 is grounded through the charger CH1.

The switch 348 is, for example, a transistor, and has a collector connected to the charge enable/disable signal line L4. The charge enable/disable signal line L4 is electrically connected to the power supply (12V) through a photocoupler PC of the charger CH. An emitter of the switch 348 is grounded. The MPU 39 controls a base potential of the switch 348.

The charger CH1 includes a power supply (12 V), a charge start button ST, the contactor-on relay CO, and the photocoupler PC.

The charge start button ST can switch the connection of the power supply (12 V) of the charger CH1 to anodes of the first and second insulation switches 342 and 344.

The precharge sub-contactors 25A and 25B change their connection conditions depending on the potential difference between the first and second charge start signal lines L1 and L2 as well as the turn-on of the contactor drive circuit 38. The MPU 39 selectively connects and releases the contactor drive circuit 38.

When the user pushes the charge start button ST, the power supply (12 V) of the charger CH1 is connected to the first insulation switch 342 to turn on the first insulation switch 342. Based on the connection of the first insulation switch 342, the MPU 39 of the charge ECU 30 detects that the user requested the start of charging, i.e., detects the charge start signal.

Further, when the contactor-on relay CO is connected, the power supply (12 V) of the charger CH1 is connected to the second insulation switch 344, and the second insulation switch 344 is connected (turned on) to supply the charge start signal to the second charge start signal L2. The charger CH1 controls the connection and release of the contactor-on relay CO based on the control signal provided from the MPU 39 of the charge ECU 30.

When the contactor-on relay CO of the charger CH1 is connected, the first charge signal line L1 and the second charge start signal line L2 are grounded, and the charge sub-contactors 25A and 25B are connected.

In this state, the MPU 39 of the charge ECU 30 determines whether the number of the connected first insulation switches 342 is equal to that of the connected third insulation switches 346, or not. When those are equal, the MPU 39 sends, through the CAN communications, on-vehicle battery information (the maximum voltage, the capacity of the battery pack, the maximum charging time and others) to the chargers CH1 to CH3. When it determines that the connected first insulation switches 342 are not equal in number to the connected third insulation switches 346, the MPU 39 waits for a certain time, and then the MPU 39 sends, through the CAN communications, the charge error signal to the chargers CH1 to CH3, and notifies the user through the vehicle ECU 10 that the charge error has occurred.

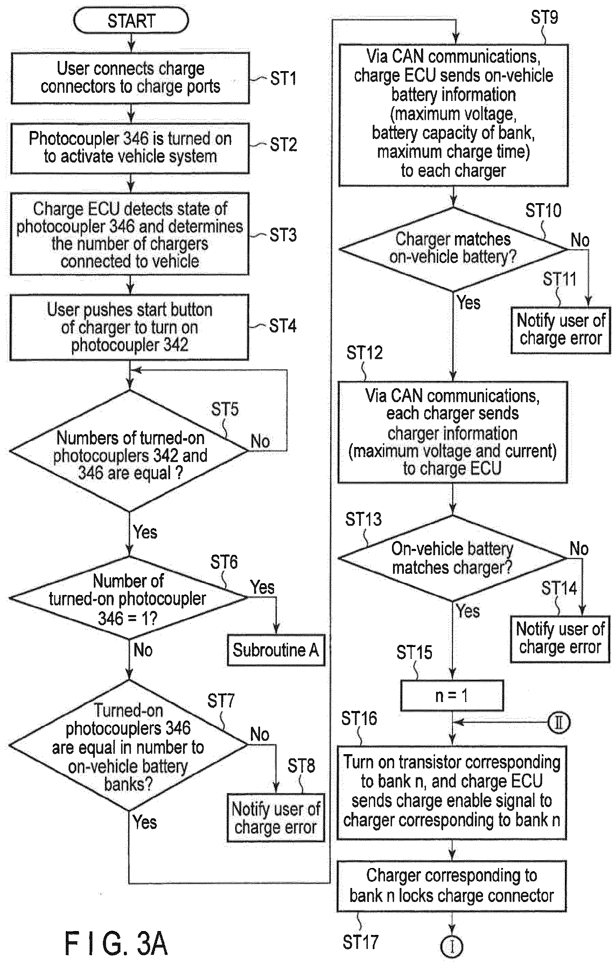

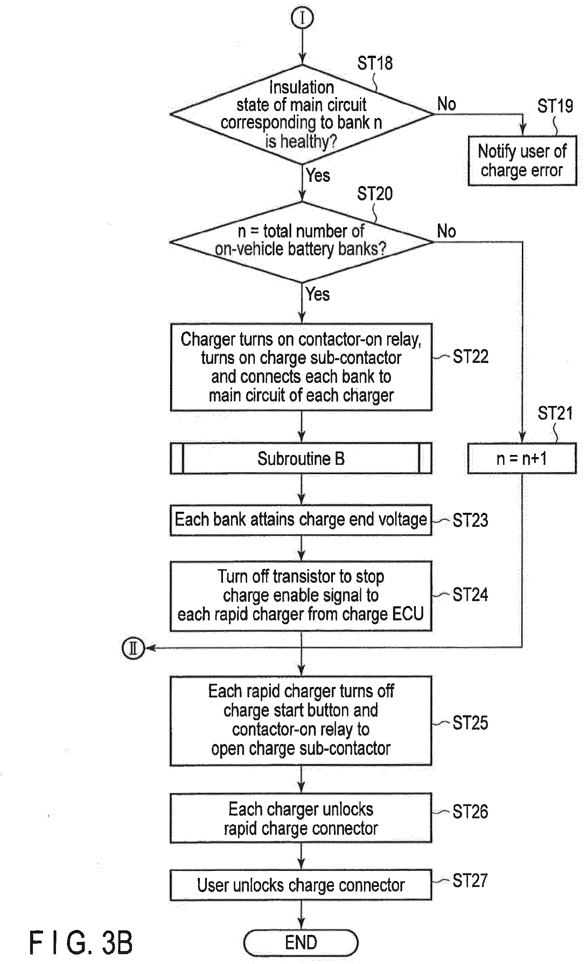

FIGS. 3A and 3B are flowcharts illustrating an example of a method of charging the battery pack and the electric vehicle of the embodiment.

First, the user connects the charge connectors CN1 to CN3 of the chargers CH1 to CH3 to the charge ports 401 to 403 on the vehicle side in a one-to-one relationship, respectively (step ST1).

When the charge connectors CN1 to CN3 are connected, the third insulation switches 346 (illustrated in FIG. 2) of the analog interface circuits 34A to 34C of the charge ECU 30 are connected to activate the electric vehicle (step ST2).

Also, the MPU 39 of the charge ECU 30 detects the connection condition of the third insulation switch 346 (illustrated in FIG. 2), and detects the number of the charge connectors CN1 to CN3 connected to the electric vehicle (step ST3).

When the user pushes the charge start buttons ST of the chargers CH1 to CH3, the first insulation switches 342 (illustrated in FIG. 2) are connected, and the MPU 39 of the charge ECU 30 detects that the user requested the start of charging (step ST4).

In this state, the MPU 39 of the charge ECU 30 determines whether the connected first insulation switches 342 are equal in number to the connected third insulation switches 346, or not (step ST5). When equal, the MPU 39 determines whether the connected first insulation switch 342 is one in number, or not (step ST6). In the step ST5, when the number of the connected first insulation switches 342 is not equal to that of the connected third insulation switches 346 even after a predetermined time elapsed, a charge error signal is sent, and notification to the user is performed through the vehicle ECU 30, similarly to processing at step ST8 described later.

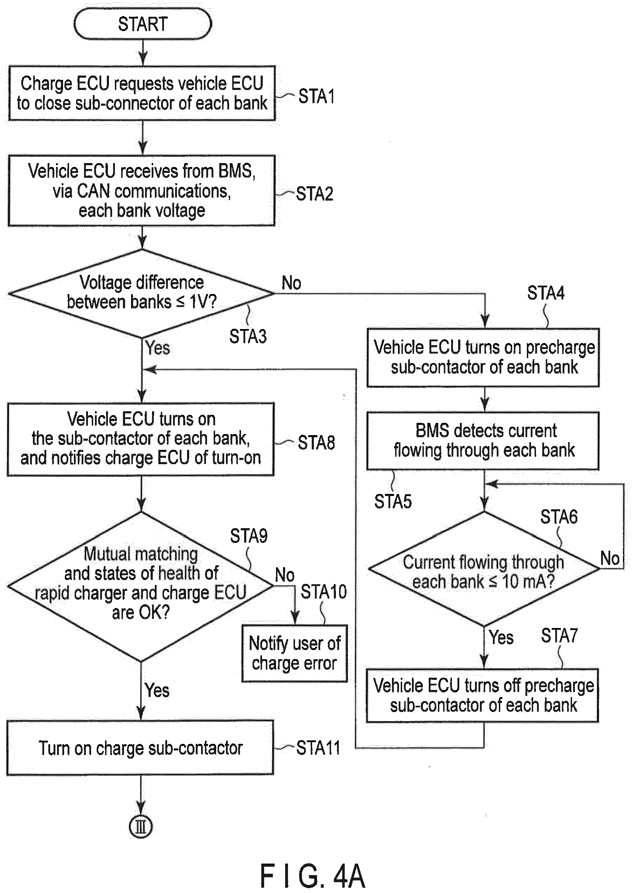

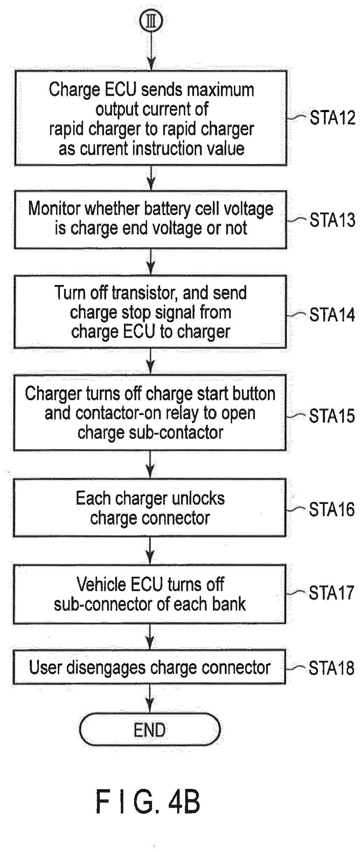

When the number of connected first insulation switch 342 is 1, the MPU 39 executes a subroutine A illustrated in FIGS. 4A and 4B.

When the number of connected first insulation switches 342 is not 1, the MPU 39 further determines whether the number of connected first insulation switches 342 is equal to the number of the battery banks BT1 to BT3, or not (step SAT7).

When the number of connected first insulation switches 342 is equal to the number of the battery banks BT1 to BT3, the MPU 39 sends, through the CAN communications, the on-vehicle battery information (the maximum voltage, the battery capacity of the bank, the maximum charging time, and the like) to the chargers CH1 to CH3 (step ST9).

When not equal, the MPU 39 sends the charge error signal to the chargers CH1 to CH3 after a certain time, notifies the user through the vehicle ECU 10 that the charge error has occurred, and ends the processing (step ST8).

Based on the received on-vehicle battery information, the chargers CH1 to CH3 determine whether the battery banks BT1 to BT3 have matched the chargers CH1 to CH3 or not (step ST10).

When the battery banks BT1 to BT3 do not match the chargers CH1 to CH3, the chargers CH1 to CH3 send, through the CAN communications, the charge error signal to the charge ECU 30, provides a notification of the charge error through the vehicle ECU 10 to the user, and ends the processing (step ST11).

When the battery banks BT1 to BT3 match the chargers CH1 to CH3, the chargers CH1 to CH3 send, through the CAN communications, the information (the maximum voltage, the maximum current and the like) about the chargers CH1 to CH3 to the charge ECU 30 (step ST12).

Based on the received information about the chargers CH1 to CH3, the MPU 39 of the charge ECU determines whether the chargers CH1 to CH3 match the battery banks BT1 to BT3, or not (step ST13).

When the chargers CH1 to CH3 do not match the battery banks BT1 to BT3, the MPU 39 sends, through the CAN communications, the charge error signal to the chargers CH1 to CH3, sends a notification of the charge error through the vehicle ECU 10 to the user, and ends the processing (step ST14).

Then, the MPU 39 sets n to 1 (n = 1) (step ST15).

Then, the MPU 39 connects the switch 348 (illustrated in FIG. 2), and sends the charge enable signal to the charger CHn corresponding to the battery bank BTn (step ST16).

When the charger CHn receives the charge enable signal, the charger CHn locks the charge connector CNn (step ST17).

Then, the MPU 39 determines whether the insulation condition between the battery bank BTn and the main circuit is in good condition or not (step ST18). The chargers CH1 to CH3 which detect the charge enable signal lock the charge connectors CN1 to CN3, respectively, and perform the insulation checking test (about short-circuit, ground and the like) of the main circuit to determine whether the main circuit has ensured the states of health or not. For preventing erroneous detection in the insulation check, the flow from the sending of the charge enable signal to the insulation checking test is desirably executed for each charger independently of the others.

Then, the MPU 39 determines whether n is the total number of the battery banks BT1 to BT3, or not (step ST20). When n is not the total number of the battery banks BT1 to BT3, 1 is added to n, and steps ST16 to ST20 are performed again (step ST21).

When n is the total number of the battery banks BT1 to BT3, the chargers CH1 to CH3 operate, based on the control signal provided from the MPU 39, to turn on the contactor-on relays CO, and the charge sub-contactors 25A to 25F connecting the chargers CH1 to CH3 to the battery banks BT1 to BT3 are turned on to connect the battery banks BT1 to BT3 to the main circuits of the chargers CH1 to CH3, respectively (step ST22).

Then, the MPU 39 charges the battery banks BT1 to BT3 according to a subroutine B to be described later.

When voltages of the battery banks BT1 to BT3 reach the predetermined charge stop voltage (step ST23), the MPU 39 turns off the switches 348 to stop the charge enable signal for the chargers CH1 to CH3 (step ST24).

When the charge enable signal stops, the chargers CH1 to CH3 turn off the charge start buttons ST and the contactor-on relays CO. At this time, the MPU 39 turns off charge sub-contactors 25A to 25F through the contactor drive circuit 38 (step ST25).

Then, the chargers CH1 to CH3 unlocks the charge connectors CN1 to CN3 (step ST26), and the user disengages the charge connectors CN1 to CN3 from the charge ports 401 to 403 (step ST27).

FIGS. 4A and 4B are flowcharts for illustrating an example of the subroutine A in the flowchart illustrated in FIGS. 3A and 3B. The subroutine A is an example of a manner of charging the plurality of battery banks BT1 to BT3 by one or a plurality of charger(s) connected thereto when the number of the charger(s) connected to the electric vehicle is smaller than the total number of the battery banks. The case in which only the charger CH1 is connected will be described below.

First, the MPU 39 provides the request through the CAN interface circuit 36 to the vehicle ECU 10 to connect the sub-contactors 23A to 23C of the respective battery banks BT1 to BT3 (step STA1).

When the vehicle ECU 10 receives the connection request for the sub-contactors 23A to 23C, the vehicle ECU 10 obtains through the CAN communications, the voltages of the respective battery banks BT1 to BT3 from the battery management systems 21A to 21C (step STA2).

Then, the vehicle ECU 10 compares the received voltages of the battery banks BT1 to BT3, and determines whether the potential differences between the battery banks BT1 to BT3 are equal to or smaller than a predetermined value or not (step STA3). In the embodiment, the vehicle ECU 10 determines whether the potential differences between the battery banks BT1 to BT3 is 1 V or lower, or not.

When the potential differences between the battery banks BT1 to BT3 exceed 1 V, the vehicle ECU 10 connects the precharge sub-contactors 24A to 24C (step STA4).

Then, the vehicle ECU 10 obtains, from the battery management systems 21A to 21C, the values of the currents flowing through the battery banks BT1 to BT3 (step STA5).

The vehicle ECU 10 determines whether the values of the currents obtained from the battery management systems 21A to 21C are equal to or lower than a predetermined value, or not (step STA6). In this embodiment, the vehicle ECU 10 determines whether the values of the currents obtained from the battery management systems 21A to 21C are equal to or lower than, for example, 10 mA, or not.

The vehicle ECU 10 repeats the step STA6 until the values of the currents obtained from the battery management systems 21A to 21C become equal to or lower than 10 mA. When the values of the currents obtained from the battery management systems 21A to 21C become equal to or lower than 10 A, the vehicle ECU 10 turns off the precharge sub-contactors 24A to 24C (step STA7).

When the potential differences between the battery banks BT1 to BT3 are 1V or lower in the step STA3, or after the step STA ends, the vehicle ECU 10 connects the battery banks BT1 to BT3 to the respective sub-contactors 23A to 23C, and notifies the charge ECU 30 that the sub-contactors 23A to 23C are connected (step STA8).

Then, the charger CH1 and the MPU 39 determine, based on the on-vehicle battery information and the charger information, whether the battery banks BT1 to BT3 match the charger CH1 or not, and whether the states of health are ensured or not (step STA9).

When the charger CH1 and the MPU 39 determine that the battery banks BT1 to BT3 do not match the charger CH1, or that the condition of the battery banks BT1 to BT3 and the charger CH1 is not in good condition, they notify the user of the charge error through the vehicle ECU 10 (step STA10).

Then, the charger CH1 connects the contactor-on relay CO, and the MPU 39 connects the contactor drive circuit 38 to connect the charge sub-contactors 25A to 25F (step STA11).

When the charger CH1 and the MPU 39 determine that the battery banks BT1 to BT3 match the charger CH1, and that the condition the battery banks BT1 to BT3 and the charger CH1 is in good condition, the MPU 39 sends a current instruction indicating the maximum output current to the charger CH1 (step STA12).

The charger CH1 starts the charging according to the received current instruction. The MPU 39 receives the voltages of the battery cells of the battery banks BT1 to BT3 from the battery management systems 21A to 21C, and monitors whether the battery cell reach the charge end voltage or not (step STA13).

When one of the battery cells of the battery banks BT1 to BT3 reach the charge end voltage, the MPU 39 turns off the switch 348 to stop the charge enable signal for the charger CH1 (step STA14).

When the charge enable signal stops, the charger CH1 releases the connection between the charge start button ST and the contact relay CO, and turns off the charge sub-contactors 25A to 25F (step STA15).

Then, the charger CH1 releases the lock of the charge connector CN1 (step STA16).

Then, the vehicle ECU 10 turns off the sub-contactors 23A to 23C of the respective battery banks BT1 to BT3 (step STA17).

Finally, the user disengages the charge connector CN1 from the charge ports 401 to 403 to complete the charging (step STA18).

In the above description about the subroutine A, only the charger CH1 is connected to the charge connector CN1. However, similar operations are performed when only one of the other chargers CH2 and CH3 is connected. In the subroutine A, the number of the chargers connected to the charge connectors CN1 to CN3 may not be one, and the battery banks BT1 to BT3 can be charged by the similar operations when the two or more chargers CH1 to CH3 are connected.

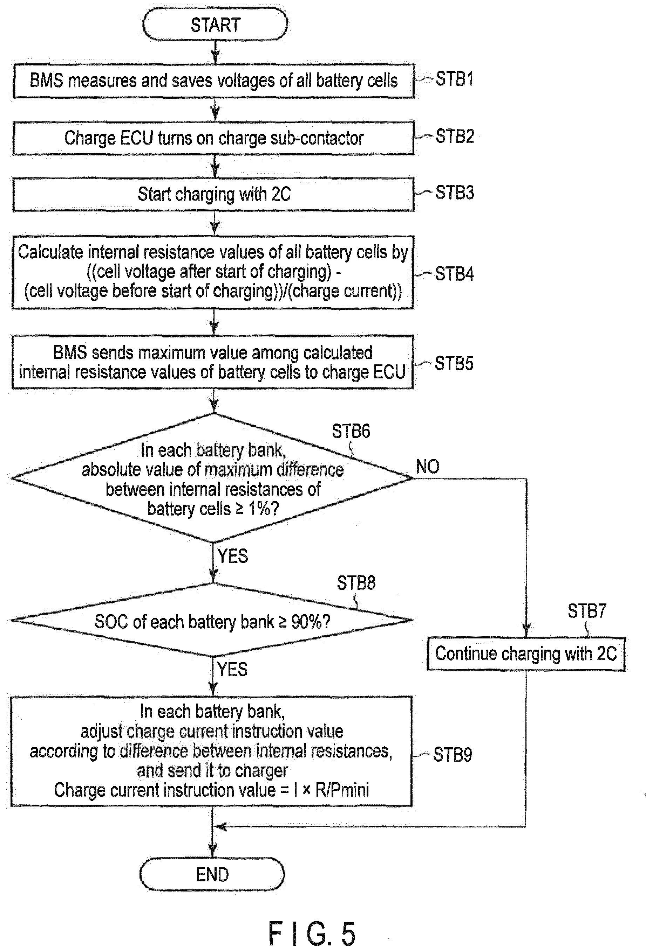

FIG. 5 is a flowchart illustrating an example of the subroutine B in the flowchart illustrated in FIGS. 3A and 3B. The following description will be given on an example of a method of determining a charge current instruction provided from the charge ECU 30 to the chargers CH1 to CH3. This control aims at overcoming voltage imbalances between the battery banks that may be caused by variations in internal resistance between the battery cells when the charging is completed.

First, prior to the start of the charging, the battery management systems 21A to 21C measure the voltages (cell voltages V1 before the charging) of all the battery cells of the battery banks BT1 to BT3, and save the voltages of all the battery cells in a memory or the like in the battery management systems 21A to 21C. After the voltages of all the battery cells are saved, the battery management systems 21A to 21C send a charge start enable signal to the charge ECU 30 through the CAN communications (step STB1).

The MPU 39 of the charge ECU that received the charge start enable signal sends a charge current instruction to each of the chargers CH1 to CH3. In this embodiment, it is intended to complete the charging within, for example, 30 minutes, and sends the charge current instruction of 2C (step STB3).

Then, the MPU 39 provides the notification to the chargers CH1 to CH3 to connect the contact relay CO, and connects the charge sub-contactors 25A to 25F. The chargers CH1 to CH3 start the charging according to the received current instruction value.

The battery management systems 21A to 21C save, in the memory or the like, all the battery cell voltages (cell voltages V2 after the start of charging) and the currents I flowing to the battery banks BT1 to BT3, which are measured after a predetermined time elapsed since the charge current started to flow (step STB3).

Then, the battery management systems 21A to 21C calculate, for all the battery cells, the internal resistance values according to the following operation (step STB4):

$$\text{Internal resistance R} = \text{(cell voltage V2 after start of charging} - \text{cell voltages V1 before the charging)}/I$$

Then, in the respective battery banks BT1 to BT3, the battery management systems 21A to 21C send the maximum values of the internal resistance values R of the battery cells to the charge ECU 30 (step STB5).

The MPU 39 of the charge ECU 30 receiving the maximum value of the internal resistance values R of the battery cells calculates ratios of the other internal resistance values R with respect to a reference (= 100%) which is the minimum value of the received internal resistance values R of the battery cells, and determines whether the absolute value of the difference with respect to the ratio of the internal resistance value R used as the reference is equal to or lower than a predetermined value, or not (step STB6).

For example, it is assumed that R1 is the maximum value among the internal resistance values R of all the battery cells in the battery bank BT1, R2 is the maximum value among the internal resistance values R of all the battery cells in the battery bank BT2, and R3 is the maximum value of the internal resistance values R among all the battery cells in the battery bank BT3. The case of (R1 < R2 < R3) will be described below.

In this case, the MPU 39 handles the internal resistance value R1 as the reference (100%), and calculates the ratios (R2/R1 × 100(%), and R3/R1 × 100(%)) of the internal resistance values R2 and R3 with respect to the internal resistance value R1. Then, it determines whether an absolute value of a difference between each calculated ratio and the reference value (100(%)) is 1(%) or lower, or not.

When the difference in absolute value is equal to 1(%) or lower, the MPU 39 does not change the current instruction value. Therefore, the charging with 2C will be performed until one of the battery cells reach the charge stop voltage (step ST7).

When the difference in absolute value is larger than 1(%), the MPU 39 monitors the SOCs (states of charge, %) of the battery banks BT1 to BT3 to determine whether the SOCs (%) of the battery banks BT1 to BT3 have reached a predetermined value (e.g., 90%) or not (step ST8). At this time, the MPU 39 calculates the SOCs (%), for example, from the voltages of the battery cells received from the battery management systems 21A to 21C. The SOC (%) monitored by the MPU 39 is a ratio determined on the assumption that the target charge capacities of the battery banks BT1 to BT3 are 100(%), and is not restricted to the value determined when the charge capacity in the fully charged state is 100(%). Further, by monitoring the voltages of the battery banks BT1 to BT3, the MPU 39 may determine whether the voltage has reached the predetermined value or not.

When the SOCs of the battery banks BT1 to BT3 reach the predetermined value, the MPU 39 calculates, based on the ratio of the internal resistance values already calculated, the charge current instruction value indicated when the battery pack reaches the vicinity of the end of the charging (e.g., SOC of about 90%).

For example, in the case of (Rmin (i.e., minimum value of the internal resistance R) : R1 = 1 : 1), the charge current instruction value for the battery bank BT1 is (I × (1/1)).

For example, in the case of (Rmin (i.e., minimum value of the internal resistance R) : R2 = 1 : 1.015), the charge current instruction value for the battery bank BT2 is (I × (1/1.015)).

For example, in the case of (Rmin (i.e., minimum value of the internal resistance R) : R3 = 1 : 1.018), the charge current instruction value for the battery bank BT3 is (I × (1/1.018)).

As described above, the charge current instruction values for the respective battery banks BT1 to BT3 are calculated, and are sent to the corresponding chargers CH1 to CH3, respectively (step STB9).

Thereafter, each of the battery banks BT1 to BT3 is charged to reach the charge stop voltage (step ST22), and the charging is completed according to the flow illustrated in FIGS. 3A and 3B.

As described above, the plurality of battery banks BT1 to BT3 connected in parallel to the main circuit are charged by the corresponding chargers CH1 to CH3, respectively, and this can reduce the charging time of the battery mounted on the electric vehicle.

Further, when the battery banks BT1 to BT3 are charged by the corresponding chargers CH1 to CH3, respectively, as described above, the charge current instruction is adjusted according to the internal resistance value R of the battery cell so that the potential differences between the charged battery banks BT1 to BT3 can be reduced.

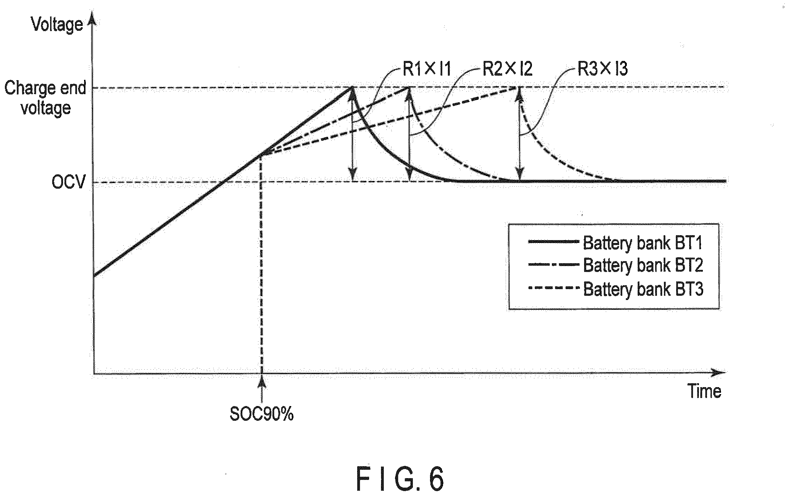

FIG. 6 illustrates an example of the time course of the voltages of the battery banks BT1 to BT3 of which charge currents are adjusted according to the internal resistance values.

After the charging to the charge stop voltage (= Open Circuit Voltage (OCV) + RI), the voltages of the battery banks BT1 to BT3 lower by a value equal to a product of the internal resistance R and the charge current I. Therefore, if the battery banks BT1 to BT3 are charged with the equal charge currents when the battery banks BT1 to BT3 have the different internal resistances, respectively, potential differences may occur between the charged battery banks BT1 to BT3. In this embodiment, the charge currents are adjusted according to the internal resistance values of the battery cells of the battery banks BT1 to BT3 so that the voltages lowered after the charging may be equal to each other (i.e., may reach (R1 × I1 = R2 × I2 = R3 × I3)). This can reduce the potential differences that may occur between the charged battery banks BT1 to BT3, and can avoid the flowing of large currents through the battery banks BT1 to BT3 when battery banks BT1 to BT3 are connected in parallel. Also, it is not necessary to reduce the potential difference by the precharging or the like after the charging, and the charging time can be further reduced.

When the capacitance of the charger is increased according to the capacity of the battery mounted on the vehicle, weights and sizes of the connectors, cables and the like may increase to deteriorate the usability for users, and also an introduction cost for the charger of the larger capacity may be required. According to the embodiment, however, even when the battery capacity increases, the charging can be completed within a short time by using a plurality of conventional chargers.

Therefore, the embodiment can provide the battery pack and the electric vehicle that can be charged within a short time.

A battery pack and an electric vehicle of a second embodiment will be described below with reference to the drawings. In the following description, the substantially same structures as those in the first embodiment bear the same reference numbers, and description thereof will not be given. In the battery pack and the electric vehicle of this embodiment, a rated voltage of an on-vehicle battery is equal to or higher than a maximum voltage (e.g., 500 V) of a charger.

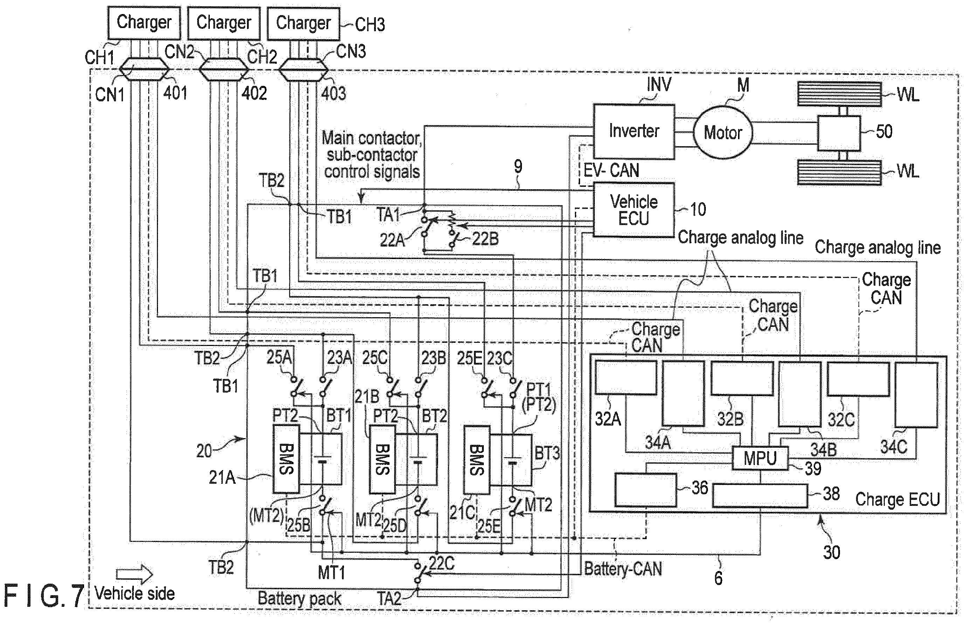

FIG. 7 schematically illustrates a non-claimed example of structures of the battery pack and the electric vehicle of the second embodiment. In the first embodiment already described, the battery banks BT1 to BT3 are connected in parallel to the main circuit. In this embodiment, however, battery banks BT1 to BT3 are connected in series to a main circuit.

A first main contactor 22A switches connection between a first charge/discharge terminal TA1 and a positive terminal PT2 of the battery bank BT3. A third main contactor 22C switches connection between a second charge/discharge terminal TA2 and a negative terminal MT2 of the battery bank BT1. That is; in the embodiment, positive terminals PT1 of the plurality of battery banks BT1 to BT3 are common to the positive terminal PT2 of the battery bank BT3, and negative terminals MT2 of the plurality of battery banks BT1 to BT3 are common to the negative terminal MT2 of the battery bank BT1.

A sub-contactor 23A switches electrical connection between the positive terminal PT2 of the battery bank BT1 and the negative terminal MT2 and the battery bank BT2. A sub-contactor 23B switches electrical connection between the positive terminal PT2 of the battery bank BT2 and the negative terminal MT2 and the battery bank BT3. A sub-contactor 23C switches electrical connection between the positive terminal PT2 of the battery bank BT3 and a main circuit. A charge sub-contactor 25B switches electrical connection between the negative terminal MT2 of the battery bank BT1 and the main circuit.

Charge sub-contactors 25A to 25F switch the electrical connection between the positive and negative terminals PT2 and MT2 of the battery banks BT1 to BT3 and charge ports 401 to 403.

In this embodiment, a battery pack 20 has three first charge terminals TB1 connected to the positive terminals PT2 of the three battery banks BT1 to BT3, respectively, and three second charge terminals TB2 connected to the negative terminals MT2 of the three battery banks BT1 to BT3, respectively.

In this embodiment, the battery banks BT1 to BT3 are connected together in series, and therefore a precharge sub-connector is not required.

Structures other than those described above are substantially the same as those of the battery pack and the electric vehicle of the first embodiment.

The operation of charging the battery pack and the electric vehicle of this embodiment does not require the precharging of the battery banks BT1 to BT3 performed in the steps STA3 to STA7 in FIGS. 4A and 4B, and it is not necessary to adjust the charge current instruction for the battery banks BT1 to BT3 according to the internal resistance values as illustrated in FIG. 5.

According to the battery pack and the electric vehicle of the embodiment, similarly to the foregoing first embodiment, the charging is performed by the chargers CH1 to CH3 respectively corresponding to the plurality of battery banks BT1 to BT3 connected in parallel to the main circuit, so that the charging time of the battery mounted on the electric vehicle can be reduced.

Further, when the capacitance of the charger is increased according to the capacity of the battery mounted on the vehicle, weights and sizes of the connectors, cables and the like may increase to deteriorate the usability for users, and also an introduction cost for the charger of the larger capacity may be required. According to the embodiment, however, even when the battery capacity increases, the charging can be completed within a short time by using a plurality of conventional chargers.

Therefore, the embodiment can provide the battery pack and the electric vehicle that can be charged within a short time.

**Claims**

1. An electric vehicle comprising: a battery pack comprising:

   a plurality of battery banks (BT1, BT2, BT3) including a plurality of battery cells and connected together in parallel;
   a battery management system (21) configured to detect and externally output voltages and temperatures of the plurality of battery cells and a current flowing through each of the battery banks (BT1, BT2, BT3);
   a first charge/discharge terminal (TA1) connected in series to each of positive terminals (PT1) of the plurality of battery banks (BT1, BT2, BT3);
   a second charge/discharge terminal (TA2) connected in series to each of negative terminals (MT2) of the plurality of battery banks (BT1, BT2, BT3);
   a plurality of first charge terminals (TB1) each connected to the positive terminals (PT2) of one of the plurality of battery banks (BT1, BT2, BT3), respectively;
   a second charge terminal (TB2) connected to the negative terminal (MT2) of each of the plurality of battery banks (BT1, BT2, BT3), respectively;

a first main contactor (22A) configured to switch connection/disconnection between the positive terminal (PT1) of the plurality of battery banks (BT1, BT2, BT3) and the first charge/discharge terminal (TA1);

a second main contactor (22C) configured to switch connection/disconnection between the negative terminal (MT1) of the plurality of battery banks (BT1, BT2, BT3) and the second charge/discharge terminal (TA2);

a first charge sub-contactor (25A, 25C, 25E) configured to switch connection/disconnection between the positive terminal (PT2) of each of the battery banks (BT1, BT2, BT3) and one of the plurality of first charge terminals (TB1);

a second charge sub-contactor (25B, 25D, 25F) configured to switch connection between the negative terminal (MT2) of each of the battery banks (BT1, BT2, BT3) and the second charge terminal (TB2); and

a plurality of sub-contactors (23A, 23B, 23C) configured to switch connection between the positive terminal (PT2) of each of the battery banks (BT1, BT2, BT3) and the positive terminal (PT1) of the plurality of battery banks (BT1, BT2, BT3);

a plurality of charge ports (401, 402, 403) each connected to one of the plurality of first charge terminals (TB1) and to the second charge terminal (TB2);

a charge ECU (30) including a plurality of first interface circuits (34A, 34B, 34C) configured to perform communications with a plurality of chargers (CH1, CH2, CH3) that are connectable to the charge port (401, 402, 403) through the plurality of charge ports (401, 402, 403), respectively, a contactor drive circuit (38) configured to control an operation of the charge sub-contactors (25A-25F), a second interface circuit (36) configured to perform communications with the battery management system (21), and a micro processing unit (39) configured to perform communications with the plurality of chargers through the first interface circuit, and perform communications with the battery management system (21) through the second interface;

an inverter (INV), connected to the first and second charge/discharge terminals (TA1, TA2), configured to convert a DC power supplied from the plurality of battery banks (BT1, BT2, BT3) into an AC power;

a motor (M) driven by the AC power supplied from the inverter (INV);

a power transmission device (50) configured to transmit a drive power of the motor (M) to a wheel axle and a drive wheel (WL); and

a vehicle ECU (10) configured to control operations of the main contactors (22A, 22C) and the sub-contactors (23A, 23B, 23C) and to release the connection of the sub-contactors (23A, 23B, 23C) when the vehicle ECU (10) receives an off signal for ignition, wherein

the battery management system (21) is configured to calculate an internal resistance value of each of the plurality of battery cells from the voltage of the battery cells, and to calculate states of charges, SOCs, of the battery banks (BT1, BT2, BT3), and

when the plurality of chargers (CH1, CH2, CH3) are connected to the plurality of charge ports (401, 402, 403), the micro processing unit (39) is configured to connect the charge sub-contactors (25A-25F) to establish connection in a one-to-one relationship between the plurality of battery banks (BT1, BT2, BT3) and the plurality of chargers (CH1, CH2, CH3), **characterized in that** the micro processing unit (39) is further configured to determine whether an absolute value of a difference between maximum values, in each battery bank, of the internal resistances of the battery cells received from the battery management system (21) is equal to or larger than a predetermined value, or not, and adjust a charge current instruction for each of the battery banks(BT1, BT2, BT3) when the absolute value is equal to or larger than the predetermined value and the SOCs of the battery banks reach a predetermined value.

2. The electric vehicle according to claim 1, wherein the charge ECU (30) is configured to compare the maximum values of the internal resistances of the plurality of battery cells in each of the battery banks (BT1, BT2, BT3), performs calculation using the smallest internal resistance value as a reference to obtain ratios of the other internal resistances, and send a charge current instruction adjusted by multiplying the charge current instruction by a coefficient corresponding to the ratio to each of the chargers (CH1, CH2, CH3) when a SOC of each of the battery banks (BT1, BT2, BT3) reaches the predetermined value.

**Patentansprüche**

1. Elektrofahrzeug, welches umfasst:
ein Batteriepack, welches umfasst:

mehrere Batteriebänke (BT1, BT2, BT3), die mehrere Batteriezellen aufweisen und parallel zusammengeschaltet sind;

ein Batteriemanagementsystem (21), das dafür ausgelegt ist, Spannungen und Temperaturen der mehreren Batteriezellen und einen Strom, der durch jede der Batteriebänke (BT1, BT2, BT3) fließt, zu detektieren und extern auszugeben;

einen ersten Lade- und Entladeanschluss (TA1), der mit jedem von positiven Anschlüssen (PT1) der mehreren Batteriebänke (BT1, BT2, BT3) in Reihe geschaltet ist;

einen zweiten Lade- und Entladeanschluss (TA2), der mit jedem von negativen Anschlüssen (MT2) der mehreren Batteriebänke (BT1, BT2, BT3) in Reihe geschaltet ist;

mehrere erste Ladeanschlüsse (TB1), die jeweils mit den positiven Anschlüssen (PT2) einer der mehreren Batteriebänke (BT1, BT2, BT3) verbunden sind;

einen zweiten Ladeanschluss (TB2), der mit dem jeweiligen negativen Anschluss (MT2) jeder der mehreren Batteriebänke (BT1, BT2, BT3) verbunden ist;

ein erstes Hauptschütz (22A), das dafür ausgelegt ist, zwischen Verbindung und Trennung zwischen dem positiven Anschluss (PT1) der mehreren Batteriebänke (BT1, BT2, BT3) und dem ersten Lade- und Entladeanschluss (TA1) umzuschalten;

ein zweites Hauptschütz (22C), das dafür ausgelegt ist, zwischen Verbindung und Trennung zwischen dem negativen Anschluss (MT1) der mehreren Batteriebänke (BT1, BT2, BT3) und dem zweiten Lade- und Entladeanschluss (TA2) umzuschalten;

ein erstes Lade-Unter-Schütz (25A, 25C, 25E), das dafür ausgelegt ist, zwischen Verbindung und Trennung zwischen dem positiven Anschluss (PT2) jeder der Batteriebänke (BT1, BT2, BT3) und einem der mehreren ersten Ladeanschlüsse (TB1) umzuschalten;

ein zweites Lade-Unter-Schütz (25B, 25D, 25F), das dafür ausgelegt ist, eine Verbindung zwischen dem negativen Anschluss (MT2) jeder der Batteriebänke (BT1, BT2, BT3) und dem zweiten Ladeanschluss (TB2) zu schalten; und

mehrere Unter-Schütze (23A, 23B, 23C), die dafür ausgelegt sind, eine Verbindung zwischen dem positiven Anschluss (PT2) jeder der Batteriebänke (BT1, BT2, BT3) und dem positiven Anschluss (PT1) der mehreren Batteriebänke (BT1, BT2, BT3) zu schalten;

mehrere Ladeports (401, 402, 403), die jeweils mit einem der mehreren ersten Ladeanschlüsse (TB1) und mit dem zweiten Ladeanschluss (TB2) verbunden sind;

eine Lade-ECU (30), die aufweist: mehrere erste Schnittstellenschaltungen (34A, 34B, 34C), die dafür ausgelegt sind, Kommunikationen mit mehreren Ladegeräten (CH1, CH2, CH3), welche mit dem Ladeport (401, 402, 403) verbindbar sind, über die mehreren jeweiligen Ladeports (401, 402, 403) durchzuführen, eine Schützansteuerschaltung (38), die dafür ausgelegt ist, einen Betrieb der Lade-Unter-Schütze (25A-25F) zu steuern, eine zweite Schnittstellenschaltung (36), die dafür ausgelegt ist, Kommunikationen mit dem Batteriemanagementsystem (21) durchzuführen, und eine Mikroverarbeitungseinheit (39), die dafür ausgelegt ist, Kommunikationen mit den mehreren Ladegeräten über die erste Schnittstellenschaltung durchzuführen und Kommunikationen mit dem Batteriemanagementsystem (21) über die zweite Schnittstelle durchzuführen;

einen Wechselrichter (INV), der mit dem ersten und dem zweiten Lade- und Entladeanschluss (TA1, TA2) verbunden ist und dafür ausgelegt ist, einen von den mehreren Batteriebänken (BT1, BT2, BT3) gelieferten Gleichstrom in einen Wechselstrom umzuwandeln;

einen Motor (M), der mit dem Wechselstrom angetrieben wird, der von dem Wechselrichter (INV) geliefert wird;

eine Kraftübertragungsvorrichtung (50), die dafür ausgelegt ist, eine Antriebskraft des Motors (M) auf eine Radachse und ein Antriebsrad (WL) zu übertragen; und

eine Fahrzeug-ECU (10), die dafür ausgelegt ist, den Betrieb der Hauptschütze (22A, 22C) und der Unter-Schütze (23A, 23B, 23C) zu steuern und die Verbindung der Unter-Schütze (23A, 23B, 23C) freizugeben, wenn die Fahrzeug-ECU (10) ein Aus-Signal für Zündung empfängt,

wobei

das Batteriemanagementsystem (21) dafür ausgelegt ist, einen Wert des Innenwiderstands jeder der mehreren Batteriezellen aus der Spannung der Batteriezellen zu berechnen und Ladezustände, SOCs, der Batteriebänke (BT1, BT2, BT3) zu berechnen, und

wenn die mehreren Ladegeräte (CH1, CH2, CH3) mit den mehreren Ladeports (401, 402, 403) verbunden sind, die Mikroverarbeitungseinheit (39) dafür ausgelegt ist, die Lade-Unter-Schütze (25A-25F) zu verbinden, um eine Verbindung in einer Eins-zu-Eins-Beziehung zwischen den mehreren Batteriebänken (BT1, BT2, BT3) und den mehreren Ladegeräten (CH1, CH2, CH3) herzustellen,

**dadurch gekennzeichnet, dass** die Mikroverarbeitungseinheit (39) ferner dafür ausgelegt ist zu bestimmen, ob ein absoluter Betrag einer Differenz zwischen maximalen Werten, in jeder Batteriebank, der Innenwiderstände der Batteriezellen, die von dem Batteriemanagementsystem (21) empfangen wurden, gleich einem oder größer als ein vorbestimmter Wert ist oder nicht, und eine Ladestromanweisung für jede der Batteriebänke (BT1, BT2, BT3) zu korrigieren, wenn der absolute Betrag gleich dem oder größer als der vorbestimmte Wert ist und die SOCs der Batteriebänke einen vorbestimmten Wert erreichen.

**2.** Elektrofahrzeug nach Anspruch 1, wobei die Lade-ECU (30) dafür ausgelegt ist, die maximalen Werte der Innenwiderstände der mehreren Batteriezellen in jeder der Batteriebänke (BT1, BT2, BT3) zu vergleichen, eine Berechnung unter Verwendung des kleinsten Wertes des Innenwiderstands als Referenzwert auszuführen, um Verhältnisse der anderen Innenwiderstände zu erhalten, und eine Ladestromanweisung, die durch Multiplizieren der Ladestromanweisung mit einem dem Verhältnis entsprechenden Koeffizienten korrigiert wurde, an jedes der Ladegeräte (CH1, CH2, CH3) zu senden, wenn ein SOC jeder der Batteriebänke (BT1, BT2, BT3) den vorbestimmten Wert erreicht.

**Revendications**

**1.** Véhicule électrique comprenant :
un bloc-batterie comprenant :

une pluralité de bancs de batterie (BT1, BT2, BT3) comprenant une pluralité d'éléments de batterie et connectés ensemble en parallèle ;
un système de gestion de batterie (21) configuré pour détecter et faire sortir de manière externe des tensions et températures de la pluralité des éléments de batterie et un courant circulant à travers chacun des bancs de batterie (BT1, BT2, BT3) ;
une première borne de charge/décharge (TA1) connectée en série à chacune des bornes positives (PT1) de la pluralité de bancs de batterie (BT1, BT2, BT3) ;
une deuxième borne de charge/décharge (TA2) connectée en série à chacune des bornes négatives (MT2) de la pluralité de bancs de batterie (BT1, BT2, BT3) ;
une pluralité de premières bornes de charge (TB1) connectées chacune respectivement aux bornes positives (PT2) de l'un de la pluralité de bancs de batterie (BT1, BT2, BT3) ;
une deuxième borne de charge (TB2) connectée à la borne négative (MT2) respectivement de chacun de la pluralité de bancs de batterie (BT1, BT2, BT3) ;
un premier contacteur principal (22A) configuré pour commuter la connexion/déconnexion entre la borne positive (PT1) de la pluralité de bancs de batterie (BT1, BT2, BT3) et la première borne de charge/décharge (TA1) ;
un deuxième contacteur principal (22C) configuré pour commuter la connexion/déconnexion entre la borne négative (MT1) de la pluralité de bancs de batterie (BT1, BT2, BT3) et la deuxième borne de charge/décharge (TA2) ;
un premier contacteur auxiliaire de charge (25A, 25C, 25E) configuré pour commuter la connexion/déconnexion entre la borne positive (PT2) de chacun des bancs de batterie (BT1, BT2, BT3) et l'une de la pluralité des premières bornes de charge (TB1) ;
un deuxième contacteur auxiliaire de charge (25B, 25D, 25F) configuré pour commuter la connexion entre la borne négative (MT2) de chacun des bancs de batterie (BT1, BT2, BT3) et la deuxième borne de charge (TB2) ; et
une pluralité de contacteurs auxiliaires (23A, 23B, 23C) configurés pour commuter la connexion entre la borne positive (PT2) de chacun des bancs de batterie (BT1, BT2, BT3) et la borne positive (PT1) de la pluralité de bancs de batterie (BT1, BT2, BT3) ;
une pluralité de ports de charge (401, 402, 403) connectés chacun à l'une de la pluralité de premières bornes de charge (TB1) et à la deuxième borne de charge (TB2) ;
une UCE de charge (30) comprenant une pluralité de premiers circuits d'interface (34A, 34B, 34C) configurés pour réaliser des communications avec une pluralité de chargeurs (CH1, CH2, CH3) pouvant être connectés au port de charge (401, 402, 403) respectivement via la pluralité des ports de charge(401, 402, 403), un circuit d'attaque de contacteur (38) configuré pour commander une opération des contacteurs auxiliaires de charge (25A-25F), un deuxième circuit d'interface (36) configuré pour réaliser des communications avec le système de gestion de batterie (21), et une unité de micro traitement (39) configurée pour réaliser des communications avec la pluralité de chargeurs via le premier circuit d'interface, et réaliser des communications avec le système de gestion de batterie (21) via la deuxième interface ;
un convertisseur (INV), connecté aux première et deuxième bornes de charge/décharge (TA1, TA2), configuré pour convertir une puissance CC fournie par la pluralité des bancs de batterie (BT1, BT2, BT3) en une puissance CA ;
un moteur (M) commandé par la puissance CA fournie par le convertisseur (INV) ;
un dispositif de transmission de puissance (50) configuré pour transmettre une puissance motrice du moteur (M) à un axe de roue et une roue motrice (WL) ; et
une UCE de véhicule (10) configurée pour commander des opérations des contacteurs principaux (22A, 22C) et des contacteurs auxiliaires (23A, 23B, 23C) et pour libérer la connexion des contacteurs auxiliaires (23A, 23B, 23C) lorsque l'UCE de véhicule (10) reçoit un signal off pour l'allumage,

dans lequel le système de gestion de batterie (21) est configuré pour calculer une valeur de résistance interne de chacun de la pluralité des éléments de batterie à partir de la tension des éléments de batterie, et pour calculer des états de charge, SOC, des bancs de batterie (BT1, BT2, BT3), et

lorsque la pluralité des chargeurs (CH1, CH2, CH3) sont connectés à la pluralité des ports de charge (401, 402, 403), l'unité de micro traitement (39) est configurée pour connecter les contacteurs auxiliaires de charge (25A-25F) pour établir une connexion selon un rapport de un-à-un entre la pluralité de bancs de batterie (BT1, BT2, BT3) et la pluralité de chargeurs (CH1, CH2, CH3),

**caractérisé en ce que** l'unité de micro traitement (39) est en outre configurée pour déterminer si une valeur absolue d'une différence entre des valeurs maximales, dans chaque banc de batterie, des résistances internes des éléments de batterie reçue de la part du système de gestion de batterie (21) est supérieure ou égale à une valeur prédéterminée, ou non, et régler une instruction de courant de charge pour chacun des bancs de batterie (BT1, BT2, BT3) lorsque la valeur absolue est supérieure ou égale à la valeur prédéterminée et les SOC des bancs de batterie atteignent une valeur prédéterminée.

2. Véhicule électrique selon la revendication 1, dans lequel l'UCE de charge (30) est configurée pour comparer les valeurs maximales des résistances internes de la pluralité des éléments de batterie dans chacun des bancs de batterie (BT1, BT2, BT3), réaliser un calcul en utilisant la valeur de résistance interne la plus faible en tant que référence pour obtenir des rapports des autres résistances internes, et envoyer une instruction de courant de charge réglée en multipliant l'instruction de courant de charge par un coefficient correspondant au rapport à chacun des chargeurs (CH1, CH2, CH3) lorsqu'un SOC de chacun des bancs de batterie (BT1, BT2, BT3) atteint la valeur prédéterminée.

FIG.1 ⇨ Vehicle side

EP 2 874 270 B1

F I G. 2

START

User connects charge
connectors to charge ports — ST1

Photocoupler 346 is turned on
to activate vehicle system — ST2

Charge ECU detects state of
photocoupler 346 and determines
the number of chargers
connected to vehicle — ST3

User pushes start button
of charger to turn on
photocoupler 342 — ST4

ST5
Numbers of turned-on
photocouplers 342 and
346 are equal ? — No

Yes

ST6
Number of
turned-on photocoupler
346 = 1? — Yes → Subroutine A

No

ST7
Turned-on
photocouplers 346
are equal in number to
on-vehicle battery
banks? — No

Yes

ST8
Notify user of
charge error

ST9
Via CAN communications,
charge ECU sends on-vehicle
battery information
(maximum voltage,
battery capacity of bank,
maximum charge time)
to each charger

ST10
Charger matches
on-vehicle battery? — No

Yes

ST11
Notify user of
charge error

ST12
Via CAN communications,
each charger sends
charger information
(maximum voltage and current)
to charge ECU

ST13
On-vehicle battery
matches charger? — No

Yes

ST14
Notify user of
charge error

ST15
n = 1

Ⅱ

ST16
Turn on transistor corresponding
to bank n, and charge ECU
sends charge enable signal to
charger corresponding to bank n

Charger corresponding to
bank n locks charge connector

ST17          Ⅰ

FIG. 3A

FIG. 3B

```
                    ┌──────────────┐
                    │    START     │
                    └──────┬───────┘
                           ↓
        ┌────────────────────────────────────┐
        │ Charge ECU requests vehicle ECU     │── STA1
        │ to close sub-connector of each bank │
        └──────────────┬─────────────────────┘
                       ↓
        ┌────────────────────────────────────┐
        │ Vehicle ECU receives from BMS,      │── STA2
        │ via CAN communications,             │
        │ each bank voltage                   │
        └──────────────┬─────────────────────┘
                       ↓
                 ◇ Voltage difference ◇ ──No──→  ┌──────────────────────────┐
                 ◇ between banks ≤ 1V? ◇         │ Vehicle ECU turns on     │ STA4
                      STA3                        │ precharge sub-contactor  │
                   │Yes                           │ of each bank             │
                   ↓                              └───────────┬──────────────┘
        ┌────────────────────────────────┐                   ↓
        │ Vehicle ECU turns on            │── STA8  ┌──────────────────────────┐
        │ the sub-contactor of each bank, │         │ BMS detects current      │
        │ and notifies charge ECU of turn-on│       │ flowing through each bank│
        └──────────────┬─────────────────┘         └───────────┬──────────────┘
                       ↓                             STA5        ↓
              ◇ Mutual matching ◇  STA9          ◇ Current flowing through ◇ ──No
              ◇ and states of health of ◇ ─No→   ◇ each bank ≤ 10 mA?      ◇  STA6
              ◇ rapid charger and charge ECU ◇   STA10       │Yes   STA7
              ◇ are OK?          ◇       ┌──────────────┐    ↓
                   │Yes                  │ Notify user of│   ┌──────────────────────────┐
                   ↓                     │ charge error  │   │ Vehicle ECU turns off    │
        ┌────────────────────────┐       └──────────────┘   │ precharge sub-contactor  │
        │ Turn on charge sub-contactor│── STA11              │ of each bank             │
        └──────────────┬─────────┘                           └──────────────────────────┘
                       ↓
                     (III)
```

F I G. 4A

Ⅲ

```
Charge ECU sends maximum
output current of
rapid charger to rapid charger      ～STA12
as current instruction value
```

```
Monitor whether battery cell voltage
is charge end voltage or not          ～STA13
```

```
Turn off transistor, and send
charge stop signal from              ～STA14
charge ECU to charger
```

```
Charger turns off charge start button
and contactor-on relay to open        ～STA15
charge sub-contactor
```

```
Each charger unlocks
charge connector                      ～STA16
```

```
Vehicle ECU turns off
sub-connector of each bank            ～STA17
```

```
User disengages charge connector      ～STA18
```

END

# F I G. 4B

START

BMS measures and saves voltages of all battery cells — STB1

Charge ECU turns on charge sub-contactor — STB2

Start charging with 2C — STB3

Calculate internal resistance values of all battery cells by ((cell voltage after start of charging) - (cell voltage before start of charging))/(charge current)) — STB4

BMS sends maximum value among calculated internal resistance values of battery cells to charge ECU — STB5

STB6

In each battery bank, absolute value of maximum difference between internal resistances of battery cells ≥ 1%?

NO

YES

STB8

SOC of each battery bank ≥ 90%?

YES

STB7

Continue charging with 2C

In each battery bank, adjust charge current instruction value according to difference between internal resistances, and send it to charger
Charge current instruction value = I × R/Pmini — STB9

END

F I G. 5

F I G. 6

EP 2 874 270 B1

F I G. 7

**EP 2 874 270 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012013303 A1

- JP 2008278635 A